# EUROPEAN PATENT SPECIFICATION

(11) **EP 3 883 290 B1**
(45) Date of publication and mention of the grant of the patent: **18.01.2023**
(21) Application number: 18940895.8
(22) Date of filing: 21.11.2018
(51) Int. Cl.: H04W 76/40, H04W 76/12, H04W 24/02, H04L 45/74, H04W 88/14, H04W 88/18, H04W 92/24, H04W 76/11

(54) **DATA CHANNEL ESTABLISHING METHODS AND DEVICE**
VERFAHREN UND VORRICHTUNG ZUR HERSTELLUNG EINES DATENKANALS
PROCÉDÉS ET DISPOSITIF D'ÉTABLISSEMENT DE CANAL DE DONNÉES

(43) Date of publication of application: 22.09.2021
(73) Proprietor: GUANGDONG OPPO MOBILE TELECOMMUNICATIONS CORP., LTD., Dongguan, Guangdong 523860 (CN)
(72) Inventor: LIU, Jianhua, Dongguan, Guangdong 523860 (CN)
(74) Representative: RGTH
(86) International application number: PCT/CN2018/116777
(87) International publication number: WO 2020/103050

(56) References cited:
- WO-A1-2007/086680
- US-A1- 2018 115 891

## Description

### TECHNICAL FIELD

The embodiments of the disclosure relate to the field of mobile communication technologies, in particular to a method and device for establishing a data channel, and a network device.

### BACKGROUND

In Long Term Evolution (LTE) and New Radio (NR) systems, a public network system, that is, a public land network based on a Public Land Mobile Network (PLMN) is usually deployed. However, in some scenarios, such as in an office scenario, a home scenario and a factory, in order to be able to make management more effectively and safely, a local network is laid out usually by a local user or manager. Members of a local network group can make communication by means of point-to-point communication or point-to-multipoint communication. When a group contains multiple network device entities, what needs to be resolved is how to manage data channels between different network device entities. The patent application document WO2007086680, shows how connections are established in a LTE system which involves group transmissions. The core network arbitrates with the broadcast and multicast service center. The patent application US2018115891, shows a system in which a connection is made using a Session Management Function.

### SUMMARY

The embodiments of the disclosure provide a method and device for establishing a data channel, and a network device.

A method for establishing a data channel provided by the embodiment of the disclosure includes the following operations.

A first Session Management Function (SMF) entity allocates first address information to a first user plane entity, and notifies the first address information and group information of a target group to a Path Management Function (PMF) entity.

The first SMF entity acquires second address information of at least one second user plane entity in the target group from the PMF entity, and notifies the second address information of the at least one second user plane entity in the target group to the first user plane entity.

A method for establishing a data channel provided by the embodiment of the disclosure includes the following operations.

A Path Management Function (PMF) entity receives first address information and group information of a target group sent by a first Session Management Function (SMF) entity, here, the first address information is address information allocated by the first SMF entity to a first user plane entity.

The PMF entity determines at least one second SMF entity in the target group according to the group information of the target group, and notifies the first address information to the at least one second SMF entity.

The PMF entity acquires second address information of at least one second user plane entity from the at least one second SMF entity, and notifies the second address information of the at least one second user plane entity to the first SMF entity.

A method for establishing a data channel provided by the embodiment of the disclosure includes the following operations.

A first Session Management Function (SMF) entity allocates first address information to a first user plane entity, and notifies the first address information to at least one second SMF entity in a target group.

The first SMF entity acquires second address information of at least one second user plane entity from the at least one second SMF entity in the target group, and notifies the second address information of the at least one second user plane entity to the first user plane entity. A device for establishing a data channel comprising means configured to perform any of the above mentioned methods.

### BRIEF DESCRIPTION OF THE DRAWINGS

The drawings described herein are used to provide a further understanding of the disclosure and constitute a part of the disclosure. The exemplary embodiments of the disclosure and descriptions thereof are used to explain the disclosure, and do not constitute an improper limitation of the disclosure. In the drawings:
FIG. 1 is a diagram of an architecture of a communication system according to an embodiment of the disclosure;
FIG. 2 is a first flowchart of a method for establishing a data channel according to an embodiment of the disclosure;
FIG. 3 is a second flowchart of a method for establishing a data channel according to an embodiment of the disclosure;
FIG. 4 is a third flowchart of a method for establishing a data channel according to an embodiment of the disclosure;
FIG. 5 is a diagram of a network architecture without interfaces among Session Management Function (SMF) entities according to an embodiment of the disclosure;
FIG. 6 is a diagram of a network architecture with interfaces among SMF entities according to an embodiment of the disclosure;
FIG. 7 is a first diagram of a structural composition of a device for establishing a data channel according to an embodiment of the disclosure;
FIG. 8 is a second diagram of a structural composition of a device for establishing a data channel according to an embodiment of the disclosure;
FIG. 9 is a third diagram of a structural composition of a device for establishing a data channel according to an embodiment of the disclosure;
FIG. 10 is a structural diagram of a communication device according to an embodiment of the disclosure;
FIG. 11 is a structural diagram of a chip according to an embodiment of the disclosure; and
FIG. 12 is a block diagram of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are a part of the embodiments of the disclosure, but are not all of the embodiments. Based on the embodiments of the disclosure, all other embodiments obtained by those ordinarily skilled in the art without any creative work shall fall within the scope of protection of the disclosure.

The technical solutions in the embodiments of the disclosure can be applied to various communication systems, such as a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, or a 5G system.

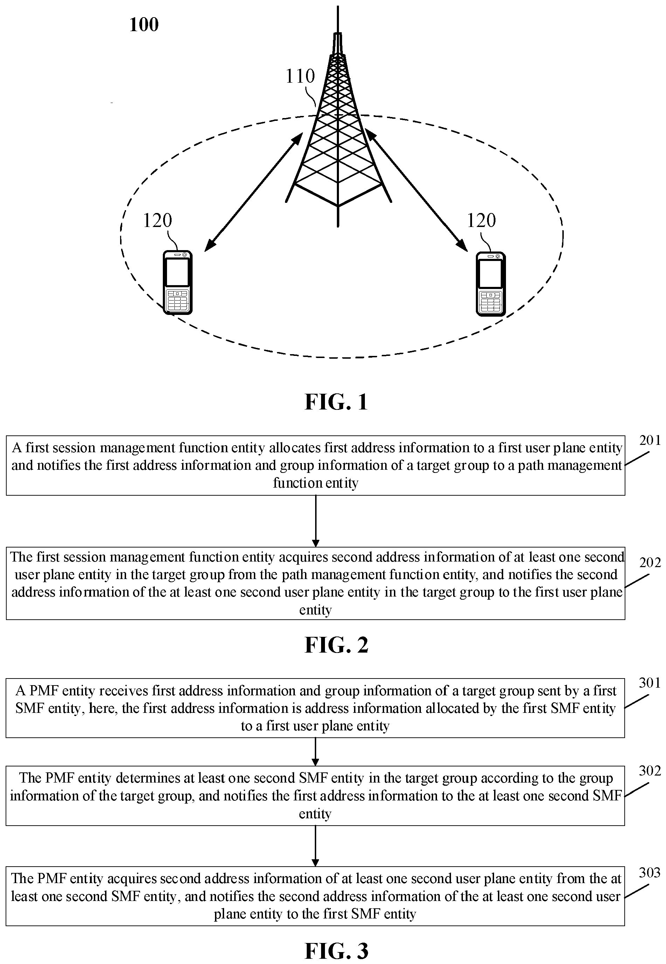

Exemplarily, a communication system 100 that the embodiments of the disclosure are applied to is illustrated in FIG. 1. The communication system 100 can include a network device 110, and the network device 110 can be a device that communicates with a terminal 120 (or called a communication terminal or a terminal device). The network device 110 can provide communication coverage for a particular geographic region and can communicate with a terminal located in the coverage. Optionally, the network device 110 can be a Base Transceiver Station (BTS) in a GSM or CDMA system, or can be a Node B (NB) in a WCDMA system, or can be an Evolutional Node B (eNB or eNodeB) in an LTE system or a wireless controller in a Cloud Radio Access Network (CRAN). The network device can also be a mobile switching center, a relay station, an access point, a vehicle device, a wearable device, a hub, a switch, a network bridge, a router, a network-side device in a 5G network, a network device in a future evolved Public Land Mobile Network (PLMN) or the like.

The communication system 100 further includes at least one terminal 120 within the coverage of the network device 110. A "terminal" used herein includes, but not limited to, a device that is configured to receive/transmit a communication signal through a wired line connection (for example, through a Public Switched Telephone Network (PSTN), Digital Subscriber Line (DSL), digital cable and direct cable connection, and/or another data connection/network), and/or through a wireless interface with, for example, a cellular network, a Wireless Local Area Network (WLAN), a digital television network like a Digital Video Broadcasting-Handheld (DVB-H) network, a satellite network, an Amplitude Modulated (AM)-Frequency Modulated (FM) broadcast transmitter and/or another terminal; and/or Internet of Things (IoT) device. The terminal arranged to communicate through a wireless interface can be called a "wireless communication terminal", a "wireless terminal" or a "mobile terminal". Examples of mobile terminals include, but not limited to, a satellite or cellular telephone; a Personal Communications System (PCS) terminal capable of combining a cellular radio telephone and data processing, faxing and data communication capabilities; a Personal Digital Assistant (PDA) capable of including a radio telephone, a pager, Internet/Intranet access, a Web browser, a notebook, a calendar and/or a Global Positioning System (GPS) receiver; and a conventional laptop and/or palmtop receiver or other electronic devices including a radio telephone transceiver. The terminal can refer to an access terminal, a User Equipment (UE), a user unit, a user station, a mobile station, a mobile radio station, a remote station, a remote terminal, a mobile device, a user terminal, a terminal device, a wireless communication device, a user agent or a user device. The access terminal can be a cellphone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle device, a wearable device, a terminal in the 5G network, a terminal in the future evolved PLMN or the like.

Optionally, the terminals 120 can perform Device to Device (D2D) communication there-between.

Optionally, the 5G system or the 5G network can also be called a New Radio (NR) system or an NR network.

FIG. 1 exemplarily illustrates one network device and two terminals. Optionally, the communication system 100 can include multiple network devices, and other number of terminals can be included within the coverage of each of the network devices, the embodiment of the disclosure does not make limitation thereto.

Optionally, the communication system 100 can further include other network entities such as a network controller and a mobility management entity and the like, the embodiment of the disclosure does not make limitation thereto.

It is to be understood that a device with communication function in the network/system in the embodiments of the disclosure can be referred to as a communication device. Taking the communication system 100 illustrated in FIG. 1 as an example, the communication device can include a network device 110 and a terminal 120 with communication functions, and the network device 110 and the terminal 120 can be the specific devices described above, which will not be repeated here. The communication device can further include other devices in the communication system 100, such as other network entities such as a network controller and a mobility management entity and the like, the embodiments of the disclosure do not make limitation thereto.

It is to be understood that the terms "system" and "network" in the disclosure can usually be used interchangeably. In the disclosure, term "and/or" is only an association relationship describing associated objects and represents that three relationships can exist. For example, A and/or B can represent three conditions: i.e., independent existence of A, existence of both A and B, and independent existence of B. In addition, character "/" in the disclosure usually represents that previous and next associated objects form an "or" relationship.

FIG. 2 is a first flowchart of a method for establishing a data channel according to an embodiment of the disclosure. As illustrated in FIG. 2, the method includes the following operations.

In 201: a first Session Management Function (SMF) entity allocates first address information to a first user plane entity, and notifies the first address information and group information of a target group to a Path Management Function (PMF) entity.

In the embodiment of the disclosure, the first SMF entity allocates the first address information to the first user plane entity, which can be triggered based on, but not limited to, the following event that: the first SMF entity receives a first request message sent by a first terminal, here, the first request message is used for requesting to join in the target group, or to establish a session with the target group, or to establish a connection with the target group.

For example, in a case that the first SMF entity receives, from the first terminal, the message for requesting to establish the session with the target group, the first SMF entity allocates the first address information for group data communication to the first user plane entity.

For another example, in a case that the first SMF entity receives, from the first terminal, the message for requesting to establish the connection with the target group, the first SMF entity allocates the first address information for group data communication to the first user plane entity.

In the embodiment of the disclosure, a group can include multiple terminals, and point-to-point communication or point-to-multipoint communication can be performed between the terminals. For example, terminal 1, terminal 2 and terminal 3 form a group, terminal 1 can perform point-to-point communication with terminal 2, and terminal 3 can perform point-to-multipoint communication with terminal 1 and terminal 2. It is assumed that each of the terminals corresponds to a respective User Plane Function (UPF) entity and a respective SMF entity. For example, terminal 1 corresponds to UPF1 and SMF1, terminal 2 corresponds to UPF2 and SMF2, and terminal 3 corresponds to UPF3 and SMF3. It can be seen that UPF1, UPF2 and UPF3 also belong to the same group, and similarly, SMF1, SMF2 and SMF3 also belong to the same group. The embodiment of the disclosure is not limited thereto, and multiple terminals in a group can correspond to the same UPF entity and/or the same SMF entity.

In the embodiment of the disclosure, the first terminal refers to a terminal to be joined into a group (referred to as a target group in the embodiment of the disclosure), and the second terminal refers to a terminal which is already in a group (referred to as a target group in the embodiment of the disclosure) and the number of the second terminals in the target group can be one or more.

In the embodiment of the disclosure, the first terminal corresponds to the first SMF entity and the first UPF entity. When the first terminal wants to join in the target group, the first terminal sends the first request message to the first SMF entity.

In the embodiment of the disclosure, after receiving the first request message sent by the first terminal, the first SMF entity firstly allocates the first address information to the first user plane entity. Here, the first address information is an address used by the first user plane entity to perform group data communication in the target group. Then, the first SMF entity notifies the first address information of the first user plane entity and the group information of the target group to the PMF entity. The PMF entity determines at least one second SMF entity in the target group according to the group information of the target group, and notifies the first address information to the at least one second SMF entity. Specifically, the PMF entity notifies the first address information to other SMF entities (that is, the second SMF entities) in the target group. It should be noted that the number of other SMF entities (that is, the second SMF entities) in the target group can be one or more. After the PMF entity notifies the first address information to the at least one second SMF entity, each of the at least one second SMF entity notifies the first address information to a second user plane entity corresponding to the second SMF entity. In this way, each of at least one second user plane entity in the target group can obtain the first address information of the first user plane entity to be joined into the target group.

In the embodiment of the disclosure, second address information of each of the at least one second user plane entity in the target group is configured by the second SMF entity corresponding to the second user plane entity. Here, the second address information is an address used by the second user plane entity to perform data communication in the target group. Each of the at least one second SMF entity in the target group sends, after configuring the second address information for the second user plane entity corresponding to the second SMF entity, the second address information to the PMF entity, and then the PMF entity sends the second address information of each of the at least one second user plane entity in the target group to the first SMF entity, and the first SMF entity notifies the second address information of the at least one second user plane entity in the target group to the first user plane entity.

In the above-mentioned solution, the first SMF entity can acquire the group information of the target group in any one of the following manners that:
1) the first SMF entity acquires the group information of the target group according to a local configuration; or
2) the first SMF entity acquires the group information of the target group from a target management device entity.

In 202: the first SMF entity acquires second address information of at least one second user plane entity in the target group from the PMF entity, and notifies the second address information of the at least one second user plane entity in the target group to the first user plane entity.

In this way, the first user plane entity can obtain the second address information of each of the at least one second user plane entity in the target group, so as to complete establishment of a channel for forwarding group data between the first user plane entity and each of the at least one second user plane entity in the target group.

It should be noted that the aforementioned address information can be, but not limited to, Core Network (CN) tunnel address information.

FIG. 3 is a second flowchart of a method for establishing a data channel according to an embodiment of the disclosure. As illustrated in FIG. 3, the method includes the following operations.

In 301: a PMF entity receives first address information and group information of a target group sent by a first SMF entity, here, the first address information is address information allocated by the first SMF entity to a first user plane entity.

In the embodiment of the disclosure, a group can include multiple terminals, and point-to-point communication or point-to-multipoint communication can be performed between the terminals. For example, terminal 1, terminal 2 and terminal 3 form a group, terminal 1 can perform point-to-point communication with terminal 2, and terminal 3 can perform point-to-multipoint communication with terminal 1 and terminal 2.

In the embodiment of the disclosure, each of the terminals corresponds to a respective UPF entity and a respective SMF entity. For example, terminal 1 corresponds to UPF1 and SMF1, terminal 2 corresponds to UPF2 and SMF2, and terminal 3 corresponds to UPF3 and SMF3. It can be seen that UPF1, UPF2 and UPF3 also belong to the same group, and similarly, SMF1, SMF2 and SMF3 also belong to the same group.

In the embodiment of the disclosure, the first terminal refers to a terminal to be joined into a group (referred to as a target group in the embodiment of the disclosure), and the second terminal refers to a terminal which is already in a group (referred to as a target group in the embodiment of the disclosure) and the number of the second terminals in the target group can be one or more.

In the embodiment of the disclosure, the first terminal corresponds to the first SMF entity and the first UPF entity. When the first terminal wants to join in the target group, the first terminal sends a first request message to the first SMF entity, and the first request message is used for requesting to join in the target group. After receiving the first request message sent by the first terminal, the first SMF entity firstly allocates the first address information to the first user plane entity. Here, the first address information is an address used for performing data communication in the target group. Then, the first SMF entity notifies the first address information of the first user plane entity and the group information of the target group to the PMF entity.

In 302: the PMF entity determines at least one second SMF entity in the target group according to the group information of the target group, and notifies the first address information to the at least one second SMF entity.

The PMF entity notifies the first address information to other SMF entities (that is, the second SMF entities) in the target group. It should be noted that the number of other SMF entities (that is, the second SMF entities) in the target group can be one or more. After the PMF entity notifies the first address information to the at least one second SMF entity, each of the at least one second SMF entity notifies the first address information to a second user plane entity corresponding to the second SMF entity. In this way, each of at least one second user plane entity in the target group can obtain the first address information of the first user plane entity to be joined into the target group.

In the embodiment of the disclosure, second address information of each of the at least one second user plane entity in the target group is configured by the second SMF entity corresponding to the second user plane entity. Here, the second address information is an address used by the second user plane entity to perform data communication in the target group. Each of the at least one second SMF entity in the target group sends, after configuring the second address information for the second user plane entity corresponding to the second SMF entity, the second address information to the PMF entity, and then the PMF entity sends the second address information of each of the at least one second user plane entity in the target group to the first SMF entity, and the first SMF entity notifies the second address information of the at least one second user plane entity in the target group to the first user plane entity.

In 303: the PMF entity acquires second address information of at least one second user plane entity from the at least one second SMF entity, and notifies the second address information of the at least one second user plane entity to the first SMF entity.

The above-mentioned solution is to forward the address information of the user plane entities through the PMF entity in a case that there are no interfaces among the SMF entities. In a case that there are interfaces among the SMF entities, notification of the address information can be implemented by using the following solution.

It should be noted that the aforementioned address information can be, but not limited to, CN tunnel address information.

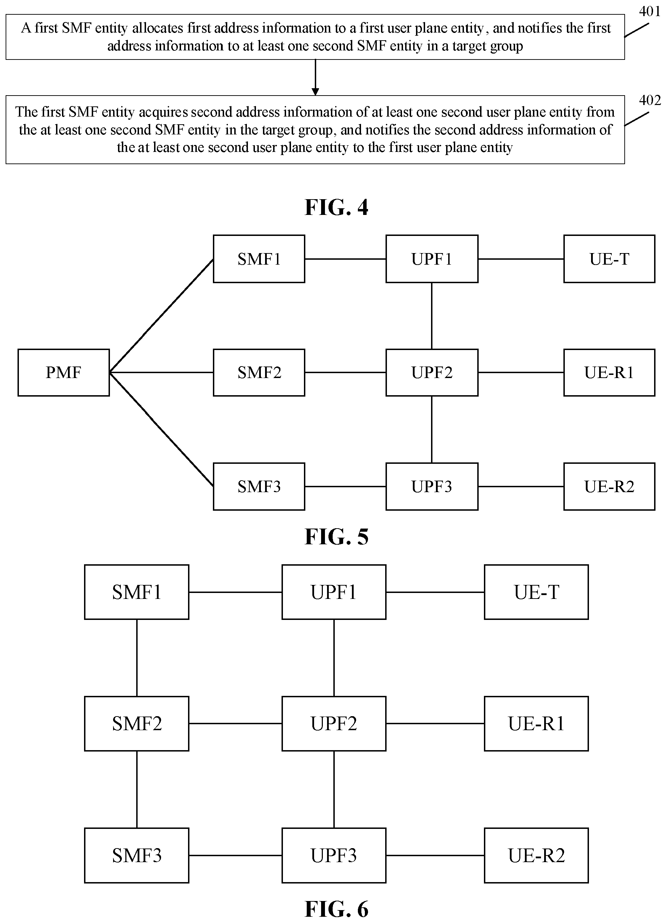

FIG. 4 is a third flowchart of a method for establishing a data channel according to an embodiment of the disclosure. As illustrated in FIG. 4, the method includes the following operations.

In 401: a first SMF entity allocates first address information to a first user plane entity, and notifies the first address information to at least one second SMF entity in a target group.

In the embodiment of the disclosure, the first SMF entity allocates the first address information to the first user plane entity, which can be triggered based on, but not limited to, the following event that: the first SMF entity receives a first request message sent by a first terminal, here, the first request message is used for requesting to join in the target group, or to establish a session with the target group, or to establish a connection with the target group.

For example, in a case that the first SMF entity receives the message, which is sent by the first terminal, for requesting to establish the session with the target group, the first SMF entity allocates the first address information for group data communication to the first user plane entity.

For another example: in a case that the first SMF entity receives the message, which is sent by the first terminal, for requesting to establish the connection with the target group, the first SMF entity allocates the first address information for group data communication to the first user plane entity.

In the embodiment of the disclosure, a group can include multiple terminals, and point-to-point communication or point-to-multipoint communication can be performed between the terminals. For example, terminal 1, terminal 2 and terminal 3 form a group, terminal 1 can perform point-to-point communication with terminal 2, and terminal 3 can perform point-to-multipoint communication with terminal 1 and terminal 2. It is assumed that each of the terminals corresponds to a respective UPF entity and a respective SMF entity. For example, terminal 1 corresponds to UPF1 and SMF1, terminal 2 corresponds to UPF2 and SMF2, and terminal 3 corresponds to UPF3 and SMF3. It can be seen that UPF1, UPF2 and UPF3 also belong to the same group, and similarly, SMF1, SMF2 and SMF3 also belong to the same group. The embodiment of the disclosure is not limited thereto, and multiple terminals in a group can correspond to the same UPF entity and/or the same SMF entity.

In the embodiment of the disclosure, the first terminal refers to a terminal to be joined into a group (referred to as a target group in the embodiment of the disclosure), and the second terminal refers to a terminal which is already in a group (referred to as a target group in the embodiment of the disclosure) and the number of the second terminals in the target group can be one or more.

In the embodiment of the disclosure, the first terminal corresponds to the first SMF entity and the first UPF entity. When the first terminal wants to join in the target group, the first terminal sends the first request message to the first SMF entity.

In the embodiment of the disclosure, after receiving the first request message sent by the first terminal, the first SMF entity firstly allocates the first address information to the first user plane entity. Here, the first address information is an address used by the first user plane entity to perform group data communication in the target group. Then, the first SMF entity notifies the first address information to other SMF entities (that is, the second SMF entities) in the target group. It should be noted that the number of other SMF entities (that is, the second SMF entities) in the target group can be one or more. After the first SMF entity notifies the first address information to the at least one second SMF entity in the target group, each of the at least one second SMF entity notifies the first address information to a second user plane entity corresponding to the second SMF entity. In this way, each of at least one second user plane entity in the target group can obtain the first address information of the first user plane entity to be joined into the target group.

In the embodiment of the disclosure, second address information of each of the at least one second user plane entity in the target group is configured by the second SMF entity corresponding to the second user plane entity. Here, the second address information is an address used by the second user plane entity to perform data communication in the target group. The first SMF entity acquires the second address information of the at least one second user plane entity from the at least one second SMF entity.

In the above-mentioned solution, the first SMF entity can acquire group information of the target group in any one of the following manners that:
1) the first SMF entity acquires the group information of the target group according to a local configuration; or
2) the first SMF entity acquires the group information of the target group from a target management device entity.

In 402: the first SMF entity acquires second address information of at least one second user plane entity from the at least one second SMF entity in the target group, and notifies the second address information of the at least one second user plane entity to the first user plane entity.

In this way, the first user plane entity can obtain the second address information of each of the at least one second user plane entity in the target group, so as to complete establishment of a channel for forwarding group data between the first user plane entity and each of the at least one second user plane entity in the target group.

It should be noted that the aforementioned address information can be, but not limited to, CN tunnel address information.

The technical solutions of the embodiments of the disclosure are exemplified below in combination with specific application examples. The examples below include subject-matter that is not covered by the claims.

FIG. 5 is a diagram of a network architecture without interfaces among SMF entities according to an embodiment of the disclosure. As illustrated in FIG. 5, SMF1, SMF2 and SMF3 are SMF entities in the same group, and UPF1, UPF2 and UPF3 are UPF entities in the same group. When UE-T joins in the group, UE-T establishes a session connection for the group. After receiving the request from the terminal, SMF1 allocates an address for group data communication (such as a CN tunnel address) on UPF1. SMF1 notifies the address and group related information (for example, group address information, group identification information, etc.) to the PMF entity. The PMF entity, which is a group path management entity, determines other SMF2, SMF3 in the group according to the group information, and notifies the address information allocated on UPF1 for group routing (that is, for group data communication) to SMF2 and SMF3. SMF2 and SMF3 notify the group address information of UPF1 to UPF2 and UPF3, respectively. SMF2 and SMF3 allocate address information for the group data communication on UPF2 and UPF3, and notify the address information to the PMF entity, and the PMF entity notifies the address information of UPF2 and UPF3 for the group to SMF1, and SMF1 notifies the address information of UPF2 and UPF3 for the group to UPF1.

At this point, the channel for forwarding group data among UPF1, UPF2 and UPF3 is established.

FIG. 6 a diagram of a network architecture with interfaces among SMF entities according to an embodiment of the disclosure. As illustrated in FIG. 6, there is direct interface information among SMF entities belonging to the same group. When UE-T joins in the group, UE-T establishes a session connection for the group. After receiving the request from the terminal, SMF1 allocates an address for group data communication (such as a CN tunnel address) on UPF1. SMF1 determines according to the group information that other SMF entities in the group include SMF2 and SMF3. Here, SMF1 can learn according to local configuration or from other group management device entities that other SMF entities in the group include SMF2 and SMF3. SMF1 notifies the address and group related information to SMF2 and SMF3, and SMF2 and SMF3 notify the group address information of UPF1 to UPF2 and UPF3, respectively. SMF2 and SMF3 allocate address information for the group data communication on UPF2 and UPF3, and notify the address information to SMF1, and SMF1 notifies the address information to UPF1.

At this point, the channel for forwarding group data among UPF1, UPF2 and UPF3 is established.

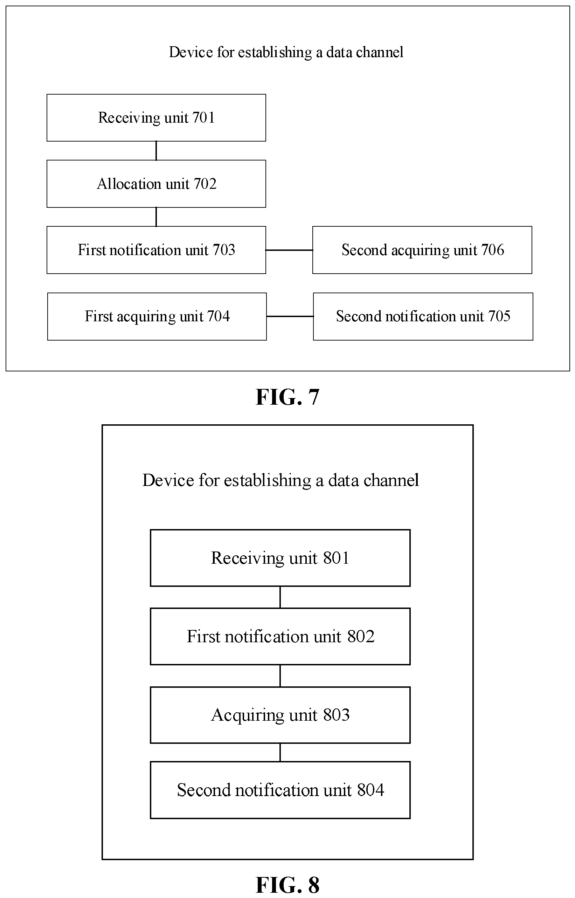

FIG. 7 is a first diagram of a structural composition of a device for establishing a data channel according to an embodiment of the disclosure, the device is for use in a first SMF entity. As illustrated in FIG. 7, the device includes the following units.

An allocation unit 702 is configured to allocate first address information to a first user plane entity.

A first notification unit 703 is configured to notify the first address information and group information of a target group to a PMF entity.

A first acquiring unit 704 is configured to acquire second address information of at least one second user plane entity in the target group from the PMF entity.

A second notification unit 705 is configured to notify the second address information of the at least one second user plane entity in the target group to the first user plane entity.

In an embodiment, the first SMF entity notifies the first address information and the group information of the target group to the PMF entity, to enable the PMF entity to: determine at least one second SMF entity in the target group according to the group information of the target group, and notify the first address information to the at least one second SMF entity.

In an embodiment, the second address information of each of the at least one second user plane entity in the target group is configured by the second SMF entity corresponding to the second user plane entity.

In an embodiment, the PMF entity notifies the first address information to the at least one second SMF entity, to enable each of the at least one second SMF entity to notify the first address information to the second user plane entity corresponding to the second SMF entity.

In an embodiment, the device further includes a receiving unit 701, configured to receive a first request message sent by a first terminal, here, the first request message is used for requesting to join in the target group, or to establish a session with the target group, or to establish a connection with the target group.

In an embodiment, the device further includes a second acquiring unit 706, configured to acquire the group information of the target group according to a local configuration; or acquire the group information of the target group from a target management device entity.

Those skilled in the art should understand that the relevant descriptions of the device for establishing a data channel according to the embodiment of the disclosure can be understood with reference to the relevant descriptions of the method for establishing a data channel according to the embodiment of the disclosure.

FIG. 8 is a second diagram of a structural composition of a device for establishing a data channel according to an embodiment of the disclosure, the device is for use in a PMF entity. As illustrated in FIG. 8, the device includes the following units.

A receiving unit 801 is configured to receive first address information and group information of a target group sent by a first SMF entity, here, the first address information is address information allocated by the first SMF entity to a first user plane entity.

A first notification unit 802 is configured to determine at least one second SMF entity in the target group according to the group information of the target group, and notify the first address information to the at least one second SMF entity.

An acquiring unit 803 is configured to acquire second address information of at least one second user plane entity from the at least one second SMF entity.

A second notification unit 804 is configured to notify the second address information of the at least one second user plane entity to the first SMF entity.

In an embodiment, the second address information of each of the at least one second user plane entity in the target group is configured by the second SMF entity corresponding to the second user plane entity.

In an embodiment, the first notification unit 802 notifies the first address information to the at least one second SMF entity, to enable each of the at least one second SMF entity to notify the first address information to the second user plane entity corresponding to the second SMF entity.

Those skilled in the art should understand that the relevant descriptions of the device for establishing a data channel according to the embodiment of the disclosure can be understood with reference to the relevant descriptions of the method for establishing a data channel according to the embodiment of the disclosure.

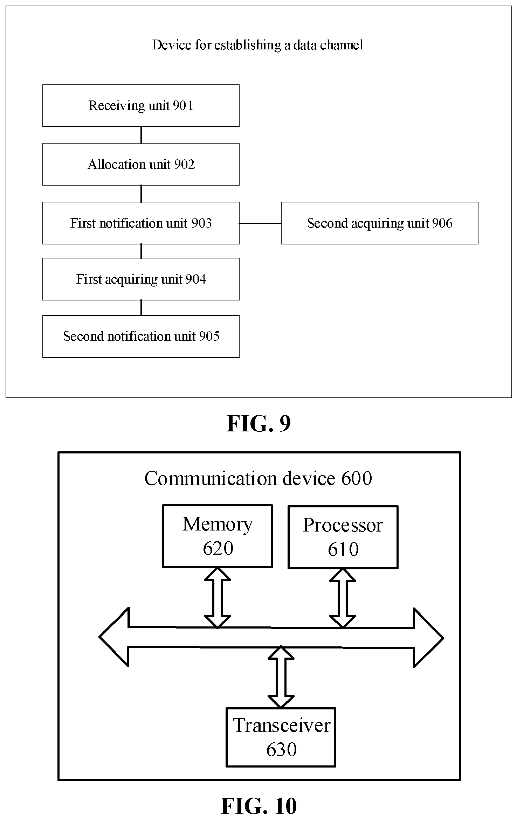

FIG. 9 is a third diagram of a structural composition of a device for establishing a data channel according to an embodiment of the disclosure, the device is for use in a first SMF entity. As illustrated in FIG. 9, the device includes the following units.

An allocation unit 902 is configured to allocate first address information to a first user plane entity.

A first notification unit 903 is configured to notify the first address information to at least one second SMF entity in a target group.

A first acquiring unit 904 is configured to acquire second address information of at least one second user plane entity from the at least one second SMF entity in the target group.

A second notification unit 905 is configured to notify the second address information of the at least one second user plane entity to the first user plane entity.

In an embodiment, the second address information of each of the at least one second user plane entity in the target group is configured by the second SMF entity corresponding to the second user plane entity.

In an embodiment, the first notification unit 903 notifies the first address information to the at least one second SMF entity in the target group, to enable each of the at least one second SMF entity to notify the first address information to the second user plane entity corresponding to the second SMF entity.

In an embodiment, the device further includes a receiving unit 901, configured to receive a first request message sent by a first terminal, here, the first request message is used for requesting to join in the target group, or to establish a session with the target group, or to establish a connection with the target group.

In an embodiment, the device further includes a second acquiring unit 906, configured to acquire group information of the target group according to a local configuration; or acquire group information of the target group from a target management device entity.

Those skilled in the art should understand that the relevant descriptions of the device for establishing a data channel according to the embodiment of the disclosure can be understood with reference to the relevant descriptions of the method for establishing a data channel according to the embodiment of the disclosure.

FIG. 10 is a structural diagram of a communication device 600 according to an embodiment of the disclosure. The communication device is a network device, such as a SMF entity, or a PMF entity, or a UPF entity. The communication device 600 illustrated in FIG. 10 includes a processor 610, and the processor 610 can call and run a computer program from a memory to execute the methods according to the embodiments of the disclosure.

Optionally, as illustrated in FIG. 10, the communication device 600 can further include the memory 620. Herein, the processor 610 can call and run the computer program from the memory 620 to execute the methods according to the embodiments of the disclosure.

Herein, the memory 620 can be a separate device independent of the processor 610, or can be integrated in the processor 610.

Optionally, as illustrated in FIG. 10, the communication device 600 can further include a transceiver 630, and the processor 610 can control the transceiver 630 to communicate with other devices. Specifically, the processor 610 can control the transceiver 630 to send information or data to other devices or to receive information or data from other devices.

Herein, the transceiver 630 can include a transmitter and a receiver. The transceiver 630 can further include an antenna, and the number of the antenna can be one or more.

Optionally, the communication device 600 can specifically be the network device according to the embodiment of the disclosure, and the communication device 600 can implement corresponding flows implemented by the network device in each of the methods according to the embodiments of the disclosure. For simplicity, elaborations are omitted herein.

Optionally, the communication device 600 can specifically be the mobile terminal/terminal according to the embodiments of the disclosure, and the communication device 600 can implement corresponding flows implemented by the mobile terminal/terminal in each of the methods according to the embodiments of the disclosure. For simplicity, elaborations are omitted herein.

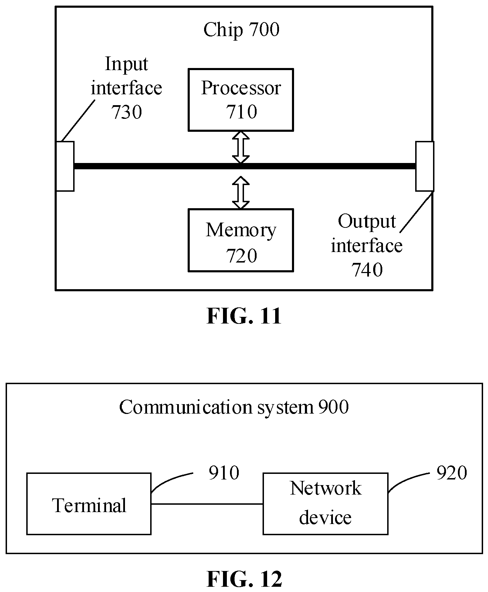

FIG. 11 is a structural diagram of a chip according to an embodiment of the disclosure. The chip 700 illustrated in FIG. 11 includes a processor 710, and the processor 710 can call and run a computer program from a memory to implement the methods in the embodiments of the disclosure.

Optionally, as illustrated in FIG. 11, the chip 700 can further include the memory 720. Herein, the processor 710 can call and run the computer program in the memory 720 to implement the methods in the embodiments of the disclosure.

Herein, the memory 720 can be a separate device independent of the processor 710, or can be integrated into the processor 710.

Optionally, the chip 700 can further include an input interface 730. Herein, the processor 710 can control the input interface 730 to communicate with other devices or chips. Specifically, the processor 710 can acquire information or data sent by other devices or chips.

Optionally, the chip 700 can further include an output interface 740. Herein, the processor 710 can control the output interface 740 to communicate with other devices or chips. Specifically, the processor 710 can output information or data to other devices or chips.

Optionally, the chip can be applied to the network device in the embodiments of the disclosure, and the chip can implement corresponding flows implemented by the network device in each of the methods according to the embodiments of the disclosure. For simplicity, elaborations are omitted herein.

Optionally, the chip can be applied to the mobile terminal/terminal in the embodiments of the disclosure, and the chip can implement corresponding flows implemented by the mobile terminal/terminal in each of the methods according to the embodiments of the disclosure. For simplicity, elaborations are omitted herein.

It is to be understood that the chip mentioned in the embodiments of the disclosure can also be called a system-level chip, a system chip, a chip system or a system on chip or the like.

FIG. 12 is a block diagram of a communication system 900 according to an embodiment of the disclosure. As illustrated in FIG. 12, the communication system 900 includes a terminal 910 and a network device 920.

Herein, the terminal 910 can be configured to implement corresponding functions implemented by the terminal in the above methods, and the network device 920 can be configured to implement corresponding functions implemented by the network device in the above methods. For simplicity, elaborations are omitted herein.

It is to be understood that the processor according to the embodiments of the disclosure may be an integrated circuit chip and has a signal processing capability. In an implementation process, each operation in the method embodiments may be completed by an integrated logical circuit in a hardware form in the processor or an instruction in a software form. The processor may be a general purpose processor, a Digital Signal Processor (DSP), an Application Specific Integrated Circuit (ASIC), a Field Programmable Gate Array (FPGA) or other programmable logical device, discrete gate or transistor logical device and discrete hardware component. Each method, operation and logical block diagram disclosed in the embodiments of the disclosure may be implemented or executed. The general purpose processor may be a microprocessor or the processor may also be any conventional processor and the like. The operations in the methods disclosed in combination with the embodiments of the disclosure may be directly embodied to be executed and completed by a hardware decoding processor or executed and completed by a combination of hardware in the decoding processor and software modules. The software module may be located in a mature storage medium in this field such as a Random Access Memory (RAM), a flash memory, a Read-Only Memory (ROM), a Programmable ROM (PROM) or Electrically Erasable PROM (EEPROM) and a register and the like. The storage medium is located in a memory, and the processor reads information in the memory, and completes the operations in the methods in combination with the hardware thereof.

It may be understood that the memory in the embodiments of the disclosure may be a volatile memory or a nonvolatile memory, or may include both the volatile and nonvolatile memories. Herein the nonvolatile memory may be a ROM, a PROM, an Erasable PROM (EPROM), an EEPROM or a flash memory. The volatile memory may be an RAM, and is used as an external high-speed cache. In an exemplary but non-limiting embodiment, RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory in a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure, and the computer program enables a computer to execute corresponding flows implemented by the network device in each of the methods according to the embodiments of the disclosure. For simplicity, elaborations are omitted herein.

Optionally, the computer-readable storage medium may be applied to a mobile terminal/terminal in the embodiments of the disclosure, and the computer program enables a computer to execute corresponding flows implemented by the mobile terminal/terminal in each of the methods according to the embodiments of the disclosure. For simplicity, elaborations are omitted herein.

The embodiments of the disclosure also provide a computer program product, which includes a computer program instruction.

Optionally, the computer program product may be applied to a network device in the embodiments of the disclosure, and the computer program instruction enables a computer to execute corresponding flows implemented by the network device in each of the methods according to the embodiments of the disclosure. For simplicity, elaborations are omitted herein.

Optionally, the computer program product may be applied to a mobile terminal/terminal in the embodiments of the disclosure, and the computer program instruction enables the computer to execute corresponding flows implemented by the mobile terminal/terminal in each of the methods according to the embodiments of the disclosure. For simplicity, elaborations are omitted herein.

The embodiments of the disclosure also provide a computer program.

Optionally, the computer program may be applied to a network device in the embodiments of the disclosure, and the computer program, when being executed in a computer, enables the computer to execute corresponding flows implemented by the network device in each of the methods according to the embodiments of the disclosure. For simplicity, elaborations are omitted herein.

Optionally, the computer program may be applied to a mobile terminal/terminal in the embodiments of the disclosure, and the computer program, when being executed in the computer, enables the computer to execute corresponding flows implemented by the mobile terminal/terminal in each of the methods according to the embodiments of the disclosure. For simplicity, elaborations are omitted herein.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn that specific working processes of the system, device and unit described above may refer to the corresponding processes in the aforementioned method embodiments and will not be elaborated herein for convenient and brief description.

In some embodiments provided by the disclosure, it is to be understood that the disclosed system, device and method may be implemented in other manners. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, between the devices or the units, and may be electrical, mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions in the embodiments according to a practical requirement.

In addition, each functional unit in each of the embodiments of the disclosure may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method according to each of the embodiments of the disclosure. The storage medium includes: various media capable of storing program codes such as a U disk, a mobile hard disk, a ROM, a RAM, a magnetic disk or an optical disk or the like.

Described above are merely specific embodiments of the disclosure, the scope of protection of the disclosure shall be subject to the scope of protection of the claims.

## Claims

1. A method for establishing a data channel, **characterized by** comprising:
allocating (201), by a first Session Management Function, SMF, entity, first address information to a first user plane entity, and notifying, (201) by the first SMF entity, the first address information and group information of a target group to a Path Management Function, PMF, entity; and
acquiring (202), by the first SMF entity, second address information of at least one second user plane entity in the target group from the PMF entity, and notifying (202), by the first SMF entity, the second address information of the at least one second user plane entity in the target group to the first user plane entity.

2. The method of claim 1, wherein notifying, by the first SMF entity, the first address information and the group information of the target group to the PMF entity, to enable the PMF entity to: determine at least one second SMF entity in the target group according to the group information of the target group, and notify the first address information to the at least one second SMF entity.

3. The method of claim 2, wherein the PMF entity notifies the first address information to the at least one second SMF entity, to enable each of the at least one second SMF entity to notify the first address information to the second user plane entity corresponding to the second SMF entity.

4. The method of any one of claims 1 to 3, wherein second address information of each of the at least one second user plane entity in the target group is configured by the second SMF entity corresponding to the second user plane entity.

5. The method of any one of claims 1 to 4, further comprising:
receiving, by the first SMF entity, a first request message sent by a first terminal, wherein the first request message is used for requesting to join in the target group, or to establish a session with the target group, or to establish a connection with the target group.

6. The method of any one of claims 1 to 5, wherein
the first SMF entity acquires the group information of the target group according to a local configuration; or
the first SMF entity acquires the group information of the target group from a target management device entity.

7. A method for establishing a data channel, **characterized by** comprising:
receiving (301), by a Path Management Function, PMF, entity, first address information and group information of a target group sent by a first Session Management Function, SMF, entity, wherein the first address information is address information allocated by the first SMF entity to a first user plane entity;
determining (302), by the PMF entity, at least one second SMF entity in the target group according to the group information of the target group, and notifying (302), by the PMF entity, the first address information to the at least one second SMF entity; and
acquiring (303), by the PMF entity, second address information of at least one second user plane entity from the at least one second SMF entity, and notifying (303), by the PMF entity, the second address information of the at least one second user plane entity to the first SMF entity.

8. The method of claim 7, wherein second address information of each of the at least one second user plane entity in the target group is configured by the second SMF entity corresponding to the second user plane entity.

9. The method of claim 7 or 8, wherein notifying, by the PMF entity, the first address information to the at least one second SMF entity, to enable each of the at least one second SMF entity to notify the first address information to the second user plane entity corresponding to the second SMF entity.

10. A method for establishing a data channel, **characterized by** comprising:
allocating (401), by a first Session Management Function, SMF, entity, first address information to a first user plane entity, and notifying (401), by the first SMF entity, the first address information to at least one second SMF entity in a target group; and
acquiring (402), by the first SMF entity, second address information of at least one second user plane entity from the at least one second SMF entity in the target group, and notifying (402), by the first SMF entity, the second address information of the at least one second user plane entity to the first user plane entity.

11. The method of claim 10, wherein second address information of each of the at least one second user plane entity in the target group is configured by the second SMF entity corresponding to the second user plane entity.

12. The method of claim 10 or 11, wherein notifying, by the first SMF entity, the first address information to the at least one second SMF entity in the target group, to enable each of the at least one second SMF entity to notify the first address information to the second user plane entity corresponding to the second SMF entity.

13. The method of any one of claims 10 to 12, further comprising:
receiving, by the first SMF entity, a first request message sent by a first terminal, wherein the first request message is used for requesting to join in the target group, or to establish a session with the target group, or to establish a connection with the target group.

14. The method of any one of claims 10 to 13, wherein
the first SMF entity acquires group information of the target group according to a local configuration; or
the first SMF entity acquires group information of the target group from a target management device entity.

15. A device for establishing a data channel, comprising means configured to perform the method of any one of claims 1-6, or the method of any one of claims 7-9, or the method of any one of claims 10-14.

## Patentansprüche

1. Verfahren zum Aufbauen eines Datenkanals, **dadurch gekennzeichnet, dass** es umfasst:
Zuweisen (201) erster Adressinformation an eine erste Anwenderebenenentität durch eine erste SMF(Session Management Function)-Entität und Melden (201) der ersten Adressinformation und von Gruppeninformation einer Zielgruppe an eine PMF(Path Management Function)-Entität durch die erste SMF-Entität; und
Erlangen (202) zweiter Adressinformation mindestens einer zweiten Anwenderebenenentität in der Zielgruppe von der PMF-Entität durch die erste SMF-Entität und Melden (202) der zweiten Adressinformation der mindestens einen zweiten Anwenderebenenentität in der Zielgruppe an die erste Anwenderebenenentität durch die erste SMF-Entität.

2. Verfahren nach Anspruch 1, wobei das Melden der ersten Adressinformation und der Gruppeninformation der Zielgruppe an die PMF-Entität durch die erste SMF-Entität erfolgt, um zu ermöglichen, dass die PMF-Entität: mindestens eine zweite SMF-Entität in der Zielgruppe gemäß der Gruppeninformation der Zielgruppe bestimmt und die erste Adressinformation an die mindestens eine zweite SMF-Entität meldet.

3. Verfahren nach Anspruch 2, wobei die PMF-Entität die erste Adressinformation an die mindestens eine zweite SMF-Entität meldet, um zu ermöglichen, dass jede der mindestens einen zweiten SMF-Entität die erste Adressinformation an die zweite Anwenderebenenentität meldet, die der zweiten SMF-Entität entspricht.

4. Verfahren nach einem der Ansprüche 1 bis 3, wobei zweite Adressinformation jeder der mindestens einen zweiten Anwenderebenenentität in der Zielgruppe von der zweiten SMF-Entität, die der zweiten Anwenderebenenentität entspricht, konfiguriert wird.

5. Verfahren nach einem der Ansprüche 1 bis 4, das ferner umfasst:
Empfangen einer ersten Anfragenachricht, die von einem ersten Endgerät gesendet wird, durch die erste SMF-Entität, wobei die erste Anfragenachricht zum Anfragen, der Zielgruppe beizutreten, verwendet wird oder dafür, eine Sitzung mit der Zielgruppe aufzubauen oder eine Verbindung mit der Zielgruppe aufzubauen.

6. Verfahren nach einem der Ansprüche 1 bis 5, wobei
die erste SMF-Entität die Gruppeninformation der Zielgruppe gemäß einer lokalen Konfiguration erlangt; oder
die erste SMF-Entität die Gruppeninformation der Zielgruppe von einer Zielverwaltungsvorrichtungsentität erlangt.

7. Verfahren zum Aufbauen eines Datenkanals, **dadurch gekennzeichnet, dass** es umfasst:
Empfangen (301) von erster Adressinformation und von Gruppeninformation einer Zielgruppe, die von einer ersten SMF(Session Management Function)-Entität gesendet werden, durch eine PMF(Path Management Function)-Entität, wobei die erste Adressinformation Adressinformation ist, die von der ersten SMF-Entität einer ersten Anwenderebenenentität zugewiesen wird;
Bestimmen (302) mindestens einer zweiten SMF-Entität in der Zielgruppe gemäß der Gruppeninformation der Zielgruppe durch die PMF-Entität und Melden (302) der ersten Adressinformation an die mindestens eine zweite SMF-Entität durch die PMF-Entität; und
Erlangen (303) zweiter Adressinformation mindestens einer zweiten Anwenderebenenentität von der mindestens einen zweiten SMF-Entität durch die PMF-Entität und Melden (303) der zweiten Adressinformation der mindestens einen zweiten Anwenderebenenentität an die erste SMF-Entität durch die PMF-Entität.

8. Verfahren nach Anspruch 7, wobei zweite Adressinformation jeder der mindestens einen zweiten Anwenderebenenentität in der Zielgruppe von der zweiten SMF-Entität, die der zweiten Anwenderebenenentität entspricht, konfiguriert wird.

9. Verfahren nach Anspruch 7 oder 8, wobei das Melden der ersten Adressinformation an die mindestens eine zweite SMF-Entität durch die PMF-Entität dafür vorgesehen ist, zu ermöglichen, dass jede der mindestens einen zweiten SMF-Entität die erste Adressinformation an die zweite Anwenderebenenentität meldet, die der zweiten SMF-Entität entspricht.

10. Verfahren zum Aufbauen eines Datenkanals, **dadurch gekennzeichnet, dass** es umfasst:
Zuweisen (401) erster Adressinformation an eine erste Anwenderebenenentität durch eine erste SMF(Session Management Function)-Entität und Melden (401) der ersten Adressinformation an mindestens eine zweite SMF-Entität in einer Zielgruppe durch die erste SMF-Entität; und
Erlangen (402) zweiter Adressinformation mindestens einer zweiten Anwenderebenenentität von der mindestens einen zweiten SMF-Entität in der Zielgruppe durch die erste SMF-Entität und Melden (402) der zweiten Adressinformation der mindestens einen zweiten Anwenderebenenentität an die erste Anwenderebenenentität durch die erste SMF-Entität.

11. Verfahren nach Anspruch 10, wobei zweite Adressinformation jeder der mindestens einen zweiten Anwenderebenenentität in der Zielgruppe von der zweiten SMF-Entität, die der zweiten Anwenderebenenentität entspricht, konfiguriert wird.

12. Verfahren nach Anspruch 10 oder 11, wobei das Melden der ersten Adressinformation an die mindestens eine zweite SMF-Entität in der Zielgruppe durch die erste SMF-Entität dafür vorgesehen ist, zu ermöglichen, dass jede der mindestens einen zweiten SMF-Entität die erste Adressinformation an die zweite Anwenderebenenentität meldet, die der zweiten SMF-Entität entspricht.

13. Verfahren nach einem der Ansprüche 10 bis 12, das ferner umfasst:
Empfangen einer ersten Anfragenachricht, die von einem ersten Endgerät gesendet wird, durch die erste SMF-Entität, wobei die erste Anfragenachricht zum Anfragen, der Zielgruppe beizutreten, verwendet wird oder dafür, eine Sitzung mit der Zielgruppe aufzubauen oder eine Verbindung mit der Zielgruppe aufzubauen.

14. Verfahren nach einem der Ansprüche 10 bis 13, wobei
die erste SMF-Entität Gruppeninformation der Zielgruppe gemäß einer lokalen Konfiguration erlangt; oder
die erste SMF-Entität Gruppeninformation der Zielgruppe von einer Zielverwaltungsvorrichtungsentität erlangt.

15. Vorrichtung zum Aufbauen eines Datenkanals, die eine Einrichtung aufweist, die dazu ausgelegt ist, das Verfahren nach einem der Ansprüche 1-6 oder das Verfahren nach einem der Ansprüche 7-9 oder das Verfahren nach einem der Ansprüche 10-14 durchzuführen.

## Revendications

1. Procédé d'établissement d'un canal de données, **caractérisé en ce qu'**il comprend :
l'attribution (201), par une première entité de fonction de gestion de session, SMF, de premières informations d'adresse à une première entité de plan d'utilisateur, et la notification (201) par la première entité SMF, des premières informations d'adresse et d'informations de groupe d'un groupe cible à une entité de fonction de gestion de trajet, PMF ; et
l'acquisition (202), par la première entité SMF, de deuxièmes informations d'adresse d'au moins une deuxième entité de plan d'utilisateur dans le groupe cible à partir de l'entité PMF, et la notification (202), par la première entité SMF, des deuxièmes informations d'adresse de la ou des deuxièmes entités de plan d'utilisateur dans le groupe cible à la première entité de plan d'utilisateur.

2. Procédé selon la revendication 1, la notification, par la première entité SMF, des premières informations d'adresse et des informations de groupe du groupe cible à l'entité PMF, pour permettre à l'entité PMF de : déterminer au moins une deuxième entité SMF dans le groupe cible en fonction des informations de groupe du groupe cible, et notifier les premières informations d'adresse à la ou aux deuxièmes entités SMF.

3. Procédé selon la revendication 2, l'entité PMF notifiant les premières informations d'adresse à la ou aux deuxièmes entités SMF, pour permettre à chacune de la ou des deuxièmes entités SMF de notifier les premières informations d'adresse à la deuxième entité de plan d'utilisateur correspondant à la deuxième entité SMF.

4. Procédé selon l'une quelconque des revendications 1 à 3, les deuxièmes informations d'adresse de chacune de la ou des deuxièmes entités de plan d'utilisateur dans le groupe cible étant configurées par la deuxième entité SMF correspondant à la deuxième entité de plan d'utilisateur.

5. Procédé selon l'une quelconque des revendications 1 à 4, comprenant en outre :
la réception, par la première entité SMF, d'un premier message de requête envoyé par un premier terminal, le premier message de requête étant utilisé pour demander de rejoindre le groupe cible, ou pour établir une session avec le groupe cible, ou pour établir une connexion avec le groupe cible.

6. Procédé selon l'une quelconque des revendications 1 à 5,
la première entité SMF acquérant les informations de groupe du groupe cible en fonction d'une configuration locale ; ou la première entité SMF acquérant les informations de groupe du groupe cible à partir d'une entité de dispositif de gestion cible.

7. Procédé d'établissement d'un canal de données, **caractérisé en ce qu'**il comprend :
la réception (301), par une entité de fonction de gestion de trajet, PMF, de premières informations d'adresse et d'informations de groupe d'un groupe cible envoyées par une première entité de fonction de gestion de session, SMF, les premières informations d'adresse étant des informations d'adresse attribuées par la première entité SMF à une première entité de plan d'utilisateur ;
la détermination (302), par l'entité PMF, d'au moins une deuxième entité SMF dans le groupe cible en fonction des informations de groupe du groupe cible, et la notification (302), par l'entité PMF, des premières informations d'adresse à la ou aux deuxièmes entités SMF ; et
l'acquisition (303), par l'entité PMF, de deuxièmes informations d'adresse d'au moins une deuxième entité de plan d'utilisateur à partir de la ou des deuxièmes entités SMF, et la notification (303), par l'entité PMF, des deuxièmes informations d'adresse de la ou des deuxièmes entités de plan d'utilisateur à la première entité SMF.

8. Procédé selon la revendication 7, les deuxièmes informations d'adresse de chacune de la ou des deuxièmes entités de plan d'utilisateur dans le groupe cible étant configurées par la deuxième entité SMF correspondant à la deuxième entité de plan d'utilisateur.

9. Procédé selon la revendication 7 ou 8, la notification, par l'entité PMF, des premières informations d'adresse à la ou aux deuxièmes entités SMF, pour permettre à chacune de la ou des deuxièmes entités SMF de notifier les premières informations d'adresse à la deuxième entité de plan d'utilisateur correspondant à la deuxième entité SMF.

10. Procédé d'établissement d'un canal de données, **caractérisé en ce qu'**il comprend :
l'attribution (401), par une première entité de fonction de gestion de session, SMF, de premières informations d'adresse à une première entité de plan d'utilisateur, et la notification (401), par la première entité SMF, des premières informations d'adresse à au moins une deuxième entité SMF dans un groupe cible ; et
l'acquisition (402), par la première entité SMF, de deuxièmes informations d'adresse d'au moins une deuxième entité de plan d'utilisateur à partir de la ou des deuxièmes entités SMF dans le groupe cible, et la notification (402), par la première entité SMF, des deuxièmes informations d'adresse de la ou des deuxièmes entités de plan d'utilisateur à la première entité de plan d'utilisateur.

11. Procédé selon la revendication 10, les deuxièmes informations d'adresse de chacune de la ou des deuxièmes entités de plan d'utilisateur dans le groupe cible étant configurées par la deuxième entité SMF correspondant à la deuxième entité de plan d'utilisateur.

12. Procédé selon la revendication 10 ou 11, la notification, par la première entité SMF, des premières informations d'adresse à la ou aux deuxièmes entités SMF dans le groupe cible, pour permettre à chacune de la ou des deuxièmes entités SMF de notifier les premières informations d'adresse à la deuxième entité de plan d'utilisateur correspondant à la deuxième entité SMF.

13. Procédé selon l'une quelconque des revendications 10 à 12, comprenant en outre :
la réception, par la première entité SMF, d'un premier message de requête envoyé par un premier terminal, le premier message de requête étant utilisé pour demander de rejoindre le groupe cible, ou pour établir une session avec le groupe cible, ou pour établir une connexion avec le groupe cible.

14. Procédé selon l'une quelconque des revendications 10 à 13,
la première entité SMF acquérant les informations de groupe du groupe cible en fonction d'une configuration locale ; ou la première entité SMF acquérant les informations de groupe du groupe cible à partir d'une entité de dispositif de gestion cible.

15. Dispositif d'établissement d'un canal de données, comprenant des moyens configurés pour mettre en œuvre le procédé selon l'une quelconque des revendications 1 à 6, ou le procédé selon l'une quelconque des revendications 7 à 9, ou le procédé selon l'une quelconque des revendications 10 à 14.
